**Europäisches Patentamt**

**European Patent Office**

**Office européen des brevets**

(19)

(11) Veröffentlichungsnummer : **0 393 366 B1**

(12)

# EUROPÄISCHE PATENTSCHRIFT

(45) Veröffentlichungstag der Patentschrift :
**30.12.92 Patentblatt 92/53**

(51) Int. Cl.$^5$ : **B60Q 1/04**

(21) Anmeldenummer : **90105187.0**

(22) Anmeldetag : **20.03.90**

(54) **Scheinwerfer für Fahrzeuge.**

(30) Priorität : **21.04.89 DE 3913152**

(43) Veröffentlichungstag der Anmeldung :
**24.10.90 Patentblatt 90/43**

(45) Bekanntmachung des Hinweises auf die
Patenterteilung :
**30.12.92 Patentblatt 92/53**

(84) Benannte Vertragsstaaten :
**ES FR GB IT SE**

(56) Entgegenhaltungen :
**DE-A- 3 615 576**

(73) Patentinhaber : **Hella KG Hueck & Co.
Rixbecker Strasse 75 Postfach 28 40
W-4780 Lippstadt (DE)**

(72) Erfinder : **Honig, Hans-Henning
Holser Heide 32
W-4796 Salzkotten 7 (DE)**

Jouve, 18, rue Saint-Denis, 75001 PARIS

# Beschreibung

Die Erfindung bezieht sich auf einen Scheinwerfer für Fahrzeuge mit den Merkmalen:

- der Reflektor ist aus einem spröden Kunststoff hergestellt und ist mit seinem Aufnahmeteil um mindestens eine Achse verstellbar verbunden,
- die Verbindung des Reflektors mit dem Aufnahmeteil wird von einem an das Aufnahmeteil angebrachten ersten Verbindungsteil und einem aus Kunststoff bestehenden zweiten Verbindungsteil gebildet, welches an einem an die Rückseite der Reflexionsschale des Reflektors angebundenen Wandungsteil mit im wesentlichen ebenen breiten Seitenflächen befestigt ist.

Ein solcher aus der DE-A-35 09 831 bekannter Scheinwerfer weist ein hülsenförmig ausgeführtes zweites Verbindungsteil auf. Die Hülse ist auf das Wandungsteil aufgesetzt, bis eine an die Innenseite der Hülse angeformte Rastnase in eine Öffnung der Wandung eingreift. Da wegen des spröden und eine hohe Warmfestigkeit aufweisenden Werkstoffs des Wandungsteils an der Verbindungsstelle zwischen Rastnase und Hinterschneidung Abrieb entstehen kann und somit ein klapperfreier Sitz der Hülse an dem Wandungsteil nicht sicher ist, verjüngt sich das Wandungsteil mit seinen breiten als Anlagefläche für Innenflächen der Hülse dienenden Seitenflächen zu seinem freien Ende hin konisch. Durch die Keilwirkung des Wandungsteils auf die Hülse ist der Festsitz der Hülse auf dem Wandungsteil sicher, jedoch ist das Wandungsteil wegen seines konischen Verlaufs an dem an die Rückseite der Reflexionsschale angebundenen Ende relativ dick. Wegen letzterem können auf der Reflexionsschicht des Reflektors Einfallstellen entstehen, welche das Licht störend streuen.

Aufgabe der Erfindung ist es, den im Gattungsbegriff beschriebenen Scheinwerfer derart zu verbessern, daß der an der Rückseite der Reflexionsschale des Reflektors angebundene Wandungsteil so dünnwandig ausgeführt sein kann, daß auf der Reflexionsfläche des Reflektors keine störenden Einfallstellen entstehen und dabei wegen einer klapperfreien Verbindung zwischen dem Wandungsteil des Reflektors und dem zweiten Verbindungsteil kein Abrieb an dem Wandungsteil des Reflektors entstehen soll und darüber hinaus, auch wenn der Wandungsteil des Reflektors und das zweite Verbindungsteil relativ große Toleranzbereiche aufweisen, deren Verbindung klapperfrei sein soll. Diese Aufgabe wird nach der Erfindung dadurch gelöst, daß

- die Wandstärke der an die Rückseite der Reflexionsschale des Reflektors angebundenen Wandungsteile der Wandstärke der dünnwandigen Reflexionsschale zumindest nicht wesentlich übersteigt,
- der Wandungsteil des Reflektors und das zweite Verbindungsteil flächig aneinanderliegen und sich überlappende Wandungsabschnitte mit sich weitestgehend überlappenden Öffnungen aufweisen,

- in die Öffnungen eine aus elastischem Material bestehende Hülse mit einem durch sie hindurchgehenden bolzenförmigen Befestigungsteil eingesetzt ist, dessen Längsachse senkrecht zu den breiten Seitenflächen der sich überlappenden Abschnitte verläuft,
- das bolzenförmige Befestigungsteil die Hülse axial so stark zusammendrückt und/oder die Durchgangsöffnung der Hülse zumindest abschnittsweise so stark aufweitet, daß die Mantelfläche der Hülse radial nach außen ausgedehnt ist und sowohl zwischen der Mantelfläche der Hülse und der Seitenflächen der sich überlappenden Öffnungen als auch zwischen der Innenfläche der Hülse und dem bolzenförmigen Befestigungsteil ein Preßsitz besteht.

Bei einer solchen vorteilhaften Lösung muß der Reflektor von vorne gesehen nicht wesentlich größer ausgeführt sein als seine Lichtaustrittsfläche. Außerdem müssen von vorne auf den Reflektor gesehen das erste und zweite Verbindungsteil nicht über den umlaufenden vorderen Rand des Reflektors hinausragen. Dadurch muß die Aufnahmeöffnung des Reflektors wegen der Verbindungsteile nicht größer ausgeführt sein, als es für den Reflektor notwendig ist.

Hierbei ist es weiterhin zweckmäßig, wenn zwischen dem Wandungsteil des Reflektors und dem zweiten Verbindungsteil eine einfache oder doppelte Überlappung besteht. Eine einfache oder doppelte Überlappung ist für einen sicheren Festsitz des zweiten Verbindungsteils an dem Wandungsteil des Reflektors ausreichend.

Vorteilhaft ist es weiterhin, wenn die Öffnungen von einer durch die sich überlappenden Abschnitte hindurchgehenden Bohrung gebildet wird, wobei als bolzenförmiges Befestigungsteil ein Niet dient, welcher mit seinem Setzkopf an einem äußeren Rand der Bohrung anliegt und mit dem Schließkopf ausschließlich an der Hülse anliegt. Eine solche Verbindung ist sehr kostengünstig herstellbar, da die Hülse und der Niet als vorhandene Teile im Handel erhältlich sind. Hierbei ist es weiterhin zweckmäßig, wenn der Schließkopf aus einem hohlen Senkkopf besteht und der Setzkopf an einem das Wandungsteil überlappenden Abschnitt des zweiten Verbindungsteils anliegt. Ein solcher Schließkopf ist durch Aufweiten des hohlen Schaftendes des Nietes mittels eines Dornes herstellbar und da der Setzkopf am zweiten Verbindungsteil anliegt, kann durch den Niet an dem aus sprödem Material hergestellten Wandungsteil des Reflektors kein Abrieb entstehen.

Bei einer vorteilhaften Weiterbildung der Erfindung dient als bolzenförmiges Befestigungsteil eine Schraube, auf deren Gewindeschaft eine Hülse aufgeschoben ist, welche mit einer Stirnfläche an dem Kopf der Schraube anliegt und mit der anderen Stirnfläche an einer Bodenfläche der sich überlappenden Öffnungen anliegt, während der aus der Hülse herausragende Endabschnitt des Gewindeschaftes in eine zentral in die Bodenfläche eingebrachte Gewindebohrung des zweiten Verbindungsteils eingreift. Hierbei ist es zweckmäßig, wenn vor der Montage des zweiten Verbindungsteils die Hülse auf den Gewindeschaft aufgeschoben wird und danach die Schraube in die sich überlappenden Öffnungen eingeführt wird. Außerdem ist diese Lösung sehr kostengünstig herstellbar, da die Mutter von dem zweiten Verbindungsteil gebildet wird.

Hierbei ist es weiterhin zweckmäßig, wenn der Kopf der Schraube ein Senkkopf ist, welcher versenkt in der Hülse angeordnet ist. Durch einen Senkkopf wird sowohl die Hülse in axialer Richtung des Bolzens als auch radial nach außen zusammengedrückt. Dadurch ist der Festsitz der Hülse in den sich überlappenden Öffnungen sehr sicher.

Ebenfalls ist es vorteilhaft, wenn zwischen dem Schließkopf des Nietes bzw. dem Kopf der Schraube und dem ihm benachbarten Rand der Öffnung die Hülse so weit radial nach außen gedrückt ist, daß sie den Rand der Öffnung übergreift. Dies ist besonders bei einer einfachen Überlappung vorteilhaft, da der Festsitz ihrer sich überlappenden Abschnitte auch quer zu ihren breiten Seitenflächen sicher ist.

Außerdem ist es vorteilhaft, wenn der Schließkopf des Nietes bzw. der Kopf der Schraube in seinem Durchmesser kleiner als der Durchmesser der sich überlappenden Öffnung ist. Dadurch ist es nicht möglich, daß der Kopf der Schraube unmittelbar an dem Rand der Öffnung des spröden Wandungsteils des Reflektors zur Anlage kommt.

Ferner ist es vorteilhaft, wenn von der Hülse und der sich überlappenden Öffnungen eine Achse gebildet wird, um welche das zweite Verbindungsteil verschwenkbar ist. Dadurch ist es möglich, daß beim Verstellen des Reflektors keine Verspannungskräfte auf den Reflektor übertragen werden.

Ferner ist es vorteilhaft, wenn der Abstand der Öffnung des Wandungsteils etwas größer ist als der Abstand der Öffnung des zweiten Verbindungsteils zu seiner an der Stirnfläche des Wandungsteils anliegenden Fläche. Bei einer solchen Lösung ist es gewährleistet, daß das zweite Verbindungsteil immer unter Vorspannung an der Stirnfläche des Wandungsteils des Reflektors anliegt.

Weiterhin ist es vorteilhaft, wenn die doppelte Überlappung von einem klammerartig ausgeführten zweiten Verbindungsteil gebildet wird, welches auf den Wandungsteil des Reflektors aufgesetzt ist. Eine solche Lösung ist nicht nur sehr kostengünstig herstellbar, sondern es ist auch der Festsitz des zweiten Verbindungsteils auf dem Wandungsteil sehr sicher.

Ein weiterer Vorteil ist es, wenn eine aus Kunststoff hergestellte Brücke an ihren beiden Enden ein angeformtes zweites Verbindungsteil aufweist und zwischen zwei parallel zueinander verlaufende Wandungsteile des Reflektors eingesetzt ist. Hierbei ist es zweckmäßig, wenn zwischen den zweiten Verbindungsteilen und dem jeweiligen Wandungsteil eine einfache Überlappung besteht. Eine solche Brücke kann der Versteifung eines sehr dünnwandigen Reflektors dienen und ist darüber hinaus schneller als zwei einzelne zweite Verbindungsteile zu montieren.

Hierbei ist es weiterhin zweckmäßig, wenn zwischen der Brücke und den beiden Wandungsteilen des Reflektors eine Spielpassung besteht und die Hülse mit ihrer Mantelfläche ausschließlich an den beiden Seitenflächen der sich überlappenden Öffnung anliegt. Dadurch sind bei der Herstellung der Brücke und der beiden Wandungsteile keine engen Toleranzbereiche notwendig, und bei der Herstellung der Verbindung zwischen den Wandungsteilen und der Brücke werden die Wandungsteile nicht mit einer so großen Kraft zur Brücke hin gedrückt, daß der Reflektor sich verzieht und somit durch einen geänderten Verlauf der Reflexionsfläche störendes Streulicht entstehen kann.

Ein weiterer Vorteil ist es, wenn ein den Wandungsteil überlappender Abschnitt des zweiten Wandungsteils mit einer schmalen Längsseite an einer Rippe des Wandungsteile und mit einer Fläche an der Stirnfläche des Wandungsteils anliegt. Dadurch ist, nachdem das zweite Verbindungsteil auf das Wandungsteil aufgesetzt ist, die Öffnung des zweiten Verbindungsteils zur Öffnung des Wandungsteils genau positioniert.

Die Erfindung ist in der Zeichnung dargestellt, und zwar zeigt

Figur 1 einen Längsschnitt durch einen Kunststoffreflektor mit einem an seiner Rückseite befestigten zweiten Verbindungsteil vor dem Zusammenfügen mit dem in das Aufnahmeteil des Reflektors eingesetzten zweiten Verbindungsteil,

Figur 2 eine andere Verbindung des zweiten Verbindungsteils mit dem Wandungsteil des Reflektors,

Figur 3 eine Ansicht aus Richtung X auf das Ausführungsbeispiel der Figur 2,

Figur 4 eine weitere Ausführungsform des zweiten Verbindungsteils und deren Befestigung,

Figur 5 eine Ansicht aus Richtung Y auf das Ausführungsbeispiel der Figur 4 und

Figur 6 in einem Längsschnitt durch den Reflektor zwei durch eine Brücke verbundene zweite Verbindungsteile.

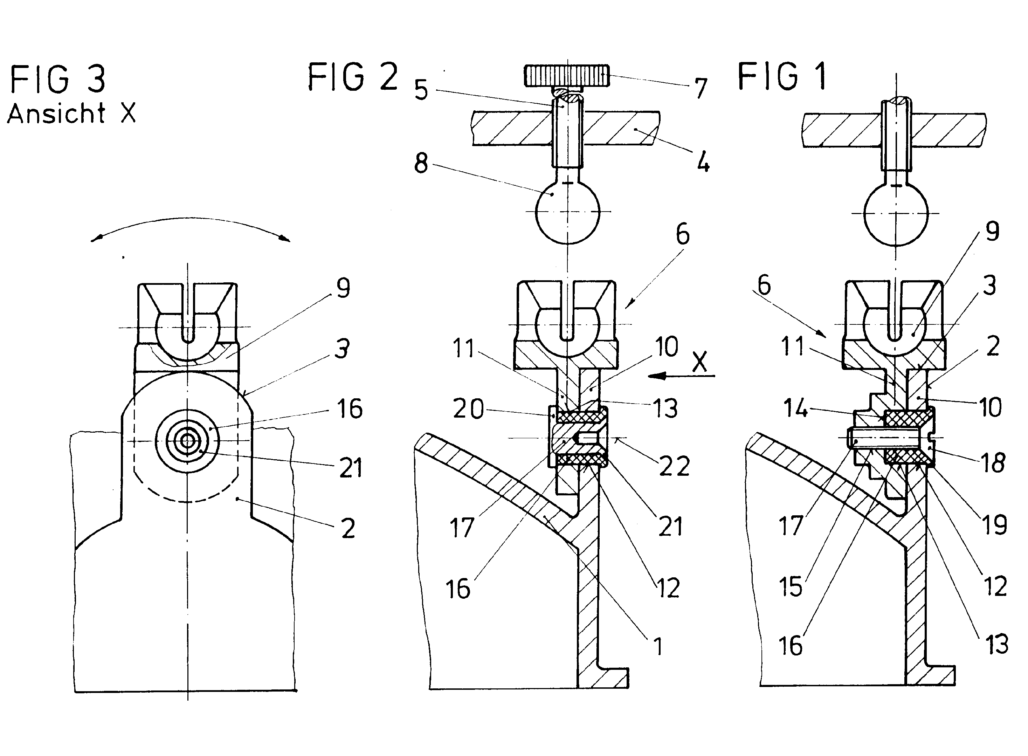

In Figur 1 der Zeichnung weist der aus Kunststoff bestehende Reflektor (1) ein an seiner Reflexionsschale angebundenes Wandungsteil (2) auf, welches mit seiner Stirnfläche (3) in Einsetzrichtung des Reflektors weist. Der Reflektor ist durch ein in ein Aufnahmeteil (4) des Reflektors (1) eingesetztes erstes Verbindungsteil (5) und ein am dem Wandungsteil (2) des Reflektors befestigtes zweites Verbindungsteil (6) mit dem Aufnahmeteil (4) verbindbar. Das erste Verbindungsteil (5) besteht aus einem Schraubbolzen, welcher an dem aus dem Aufnahmeteil nach außen herausragenden Endabschnitt einen Griffteil (7) aufweist und an seinem in das Scheinwerferinnere ragenden Ende einen Kugelkopf (8) trägt. Dieser Kugelkopf (8) rastet beim Einsetzen des Reflektors (1) in das Aufnahmeteil (4) in eine Gelenkpfanne (9) des zweiten Verbindungsteils (6) ein. Das zweite Verbindungsteil (6) und der Wandungsteil (2) des Reflektors überlappen sich einfach. In die sich überlappenden Abschnitte (10 und 11) des Wandungsteils (2) bzw. des zweiten Verbindungsteils (6) sind sich weitestgehend überlappende Öffnungen (12 und 13) eingebracht. Die Öffnung (13) des zweiten Verbindungsteils (6) weist eine Bodenfläche (14) auf, in welche zentral ein Gewindeloch (15) eingebracht ist. In die sich überlappenden Öffnungen (12 und 13) ist eine elastische zylindrische Hülse (16) angeordnet, welche vor ihrem Einsetzen auf ein bolzenförmiges Befestigungsteil (17) aufgeschoben ist. Bei diesem Ausführungsbeispiel dient als bolzenförmiges Befestigungsteil (17) eine Schraube, welche mit ihrem Gewindeschaft in die Gewindebohrung (15) eingeschraubt ist und mit ihrem Senkkopf (18) die Hülse in die sich überlappenden Öffnungen (12 und 13) hineindrückt. Dadurch dehnt sich die Mantelfläche der zylindrischen Hülse radial nach außen und liegt unter Vorspannung an den Seitenflächen der Öffnungen (12 und 13) und der Bodenfläche (14) an. Der einen kleineren Durchmesser als die Öffnungen (12 und 13) aufweisende Senkkopf preßt den zwischen ihm und dem Rand der Öffnung (12) verbleibenden Abschnitt (19) der Hülse radial nach außen, so daß dieser den Rand der Öffnung des spröden Wandungsteils (2) des Reflektors (1) übergreift.

Das in der Figur 2 dargestellte Ausführungsbeispiel unterscheidet sich von dem in Figur 1 dargestellten dadurch, daß die Öffnung (13) vollständig durch den Abschnitt (11) des zweiten Verbindungsteils hindurchgeht und als bolzenförmiges Befestigungsteil (17) ein Niet dient. Der Niet weist einen tellerförmigen Setzkopf (20) auf, mit welchem er an dem Rand der Öffnung (13) des zweiten Verbindungsteils anliegt, und einen Schließkopf (21) auf, welcher ein hohl ausgeführter Senkkopf ist. Der Schließkopf (21) ist durch Aufweiten des aufgebohrten Schaftes des Nietes (17) mittels eines Dornes hergestellt. Der die Gelenkpfanne (9) bildende Abschnitt des zweiten Verbindungsteils (6) liegt an der Stirnfläche (3) des Wandungsteils (2) an, welche einen Kreisbogen beschreibt, dessen Mittelpunkt auf der von der Hülse (16) und den Öffnungen (12 und 13) gebildeten Schwenkachse (22) für das zweite Verbindungsteil (6) liegt. Soll das zweite Verbindungsteil (6) in allen Richtungen fest an dem Wandungsteil (3) sitzen, so ist es vorteilhaft, wenn die Stirnfläche (3) des Wandungsteils (2) geradlinig verläuft.

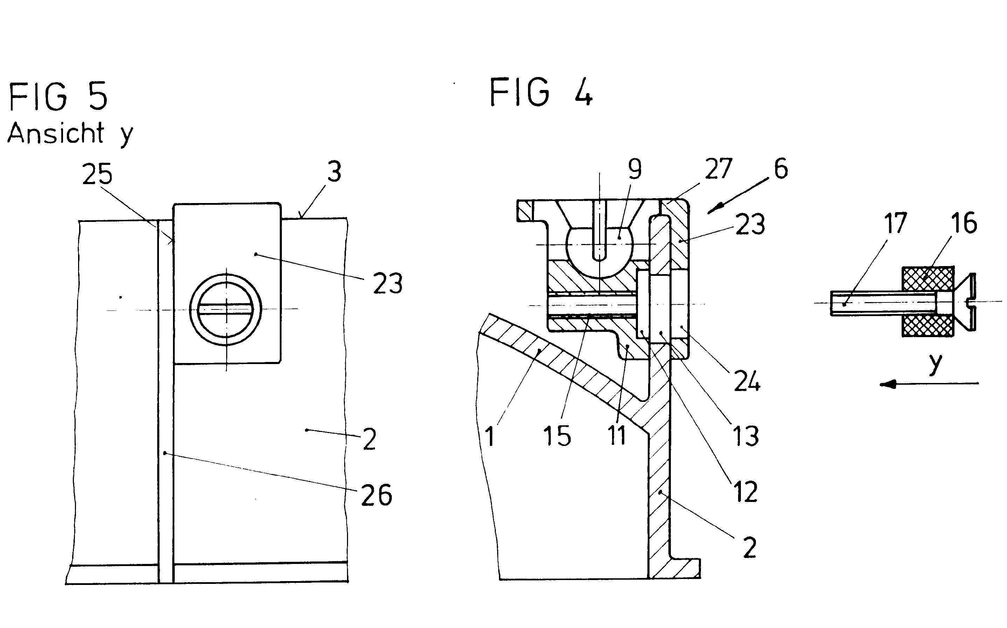

Bei dem in den Figuren 4 und 5 dargestellten Ausführungsbeispiel ist das zweite Verbindungsteil (6) klammerartig ausgeführt. Das klammerartige Verbindungsteil ist auf das Wandungsteil (2) aufgesetzt. Dadurch ergibt sich eine doppelte Überlappung. Gegenüber dem zweiten Verbindungsteil nach Figur 1 unterscheidet sich somit das zweite Verbindungsteil nach den Figuren 4 und 5 im wesentlichen dadurch, daß das zweite Verbindungsteil (6) nicht nur mit dem Abschnitt (11) an einer breiten Fläche des Wandungsteils (2) anliegt, sondern auch mit dem Abschnitt (23). Damit nach dem Aufsetzen des zweiten Verbindungsteils (6) auf das Wandungsteil (2) die sich überlappenden Öffnungen (12, 13 und 24) genau zueinander positioniert sind, gleitet die schmale Längsseite (25) an einer an den Wandungsteil angeformten Rippe (26) entlang, bis der die Abschnitte (11 und 23) verbindende mittlere Steg (27) an der Stirnfläche (3) des Wandungsteils (2) anliegt. Die Öffnung (13) in dem Wandungsteil (2) weist zur Stirnfläche (3) des Wandungsteils (2) einen größeren Abstand auf als die Öffnungen (12 und 24) des zweiten Verbindungsteils (6). Dadurch ist nach einem Einsetzen der Schraube (17) mit der Hülse (16) in die sich überlappenden Öffnungen gewährleistet, daß der die Schenkel verbindende Steg (27) unter Vorspannung an der Stirnfläche des Wandungsteils (2) anliegt. Bei diesem Verbindungsteil (6) ist die Gelenkpfanne in Einsetzrichtung des Reflektors gesehen hinter dem Gewindeloch (15) an den Abschnitt (11) eingeformt.

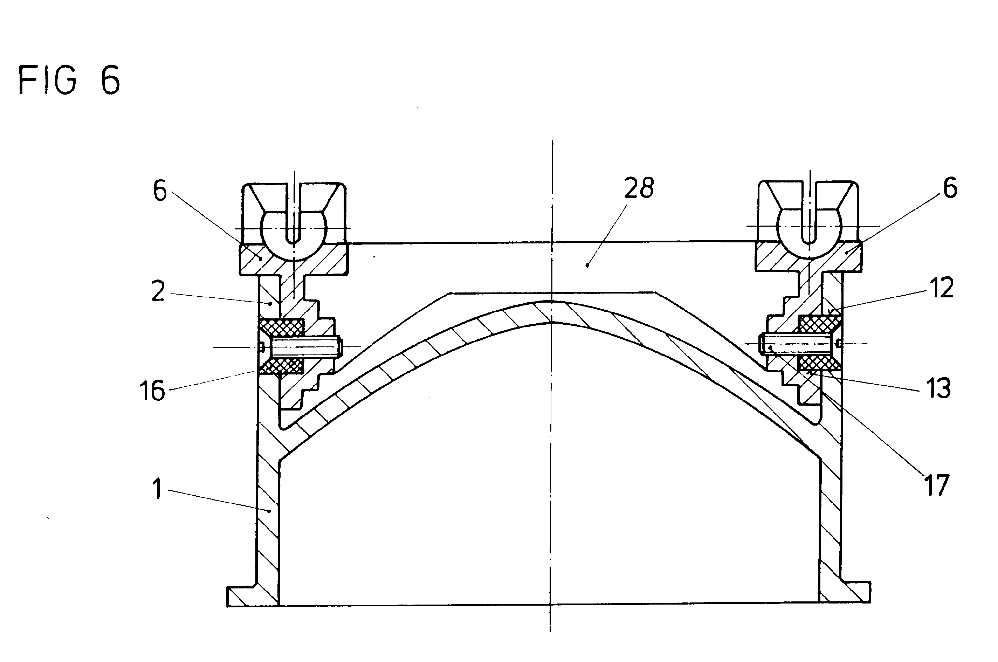

In Figur 6 ist eine Brücke (28) dargestellt, an dessen beiden Enden jeweils ein zweites Verbindungsteil (6) angeformt ist. Die Brücke ist zusammen mit den Verbindungsteilen (6) zwischen zwei Wandungsteile (2) des Reflektors (1) eingeschoben. Zwischen der Brücke und den Wandungsteilen kann etwas Spiel bestehen, da die Hülse nicht so lang ausgeführt ist, daß sie den äußeren Rand der Öffnung (13) in dem Wandungsteil (2) des Reflektors übergreift und somit nicht den Wandungsteil in Richtung des Reflektors drückt.

## Patentansprüche

1. Scheinwerfer für Fahrzeuge mit den Merkmalen:
   - der Reflektor (1) ist aus einem spröden Kunststoff hergestellt und ist mit seinem Aufnahmeteil (4) um mindestens eine Achse verstellbar verbunden,
   - die Verbindung des Reflektors (1) mit dem Aufnahmeteil (4) wird von einem an das Aufnahmeteil (4) angebrachten ersten Verbindungsteil (5) und einem aus Kunststoff bestehenden zweiten Verbindungsteil (6) gebildet, welches an einem an die Rückseite der Reflexionsschale des Reflektors (1) angebundenen Wandungsteil (2) mit im wesentlichen ebenen breiten Seitenflächen befestigt ist,

dadurch gekennzeichnet, daß

- die Wandstärke der an die Rückseite der Reflexionsschale des Reflektors (1) angebundenen Wandungsteile der Wandstärke der dünnwandigen Reflexionsschale zumindest nicht wesentlich übersteigt,

- der Wandungsteil (2) des Reflektors (1) und das zweite Verbindungsteil (6) flächig aneinanderliegende und sich überlappende Wandungsabschnitte (10, 11 oder 10, 11, 23) mit sich weitestgehend überlappenden Öffnungen (12, 13 oder 12, 13, 24) aufweisen,

- in die Öffnungen (12, 13 oder 12, 13, 24) eine aus elastischem Material bestehende Hülse (16) mit einem durch sie hindurchgehenden bolzenförmigen Befestigungsteil (17) eingesetzt ist, dessen Längsachse senkrecht zu den breiten Seitenflächen der sich überlappenden Abschnitte (10, 11 oder 10, 11, 23) verläuft,

- das bolzenförmige Befestigungsteil (17) die Hülse (16) axial so stark zusammendrückt und/oder die Durchgangsöffnung der Hülse (16) zumindest abschnittsweise so stark aufweitet, daß die Mantelfläche der Hülse (16) radial nach außen ausgedehnt ist und sowohl zwischen der Mantelfläche der Hülse (16) und der Seitenflächen der sich überlappenden Öffnungen (12, 13 oder 12, 13, 24) als auch zwischen der Innenfläche der Hülse (16) und dem bolzenförmigen Befestigungsteil (17) ein Preßsitz besteht.

2. Scheinwerfer nach Anspruch 1, dadurch gekennzeichnet, daß zwischen dem Wandungsteil (2) des Reflektors (1) und dem zweiten Verbindungsteil (6) eine einfache Überlappung besteht.

3. Scheinwerfer nach Anspruch 1, dadurch gekennzeichnet, daß zwischen dem Wandungsteil (2) des Reflektors (1) und dem zweiten Verbindungsteil (6) eine doppelte Überlappung besteht.

4. Scheinwerfer nach einem der Ansprüche 1 bis 3, dadurch gekennzeichnet, daß die Öffnung (12, 13) von einer durch die sich überlappenden Abschnitte (10, 11) hindurchgehenden Bohrung gebildet wird.

5. Scheinwerfer nach Anspruch 4, dadurch gekennzeichnet, daß als bolzenförmiges Befestigungsteil (17) ein Niet dient.

6. Scheinwerfer nach Anspruch 5, dadurch gekennzeichnet, daß der Niet (17) mit seinem Setzkopf (20) an einem äußeren Rand der Bohrung (12, 13) anliegt und mit dem Schließkopf (21) ausschließlich an der Hülse (16) anliegt.

7. Scheinwerfer nach Anspruch 5 oder 6, dadurch gekennzeichnet, daß der Setzkopf (20) an einem das Wandungsteil (2) überlappenden Abschnitt (11) des zweiten Verbindungsteils (6) anliegt.

8. Scheinwerfer nach einem der Ansprüche 5 bis 7, dadurch gekennzeichnet, daß der Schließkopf ein hohl ausgeführter Senkkopf ist.

9. Scheinwerfer nach einem der Ansprüche 1 bis 4, dadurch gekennzeichnet, daß als bolzenförmiges Befestigungsteil (17) eine Schraube dient.

10. Scheinwerfer nach Anspruch 9, dadurch gekennzeichnet, daß die auf den Gewindeschaft der Schraube (17) aufgeschobene Hülse (16) mit einer Stirnfläche an dem Kopf (18) der Schraube (17) anliegt und mit der anderen Stirnfläche an einer Bodenfläche (14) der sich überlappenden Öffnungen (12, 13) anliegt, während der aus der Hülse (16) herausragende Endabschnitt des Gewindeschaftes in eine zentral in die Bodenfläche (14) eingebrachte Gewindebohrung (15) des zweiten Verbindungsteils (6) eingreift.

11. Scheinwerfer nach Anspruch 9 oder 10, dadurch gekennzeichnet, daß der Kopf (18) der Schraube ein Senkkopf ist, welcher versenkt in der Hülse (16) angeordnet ist.

12. Scheinwerfer nach einem der Ansprüche 1 bis 11, dadurch gekennzeichnet, daß zwischen dem Schließkopf (21) des Nietes bzw. dem Kopf (18) der Schraube und dem ihm benachbarten Rand der Öffnung (12) die Hülse (16) so stark nach außen gedrückt ist, daß sie den Rand der Öffnung (12) übergreift.

13. Scheinwerfer nach einem der Ansprüche 1 bis 12, dadurch gekennzeichnet, daß der Schließkopf (21) des Nietes bzw. der Kopf (18) der Schraube in seinem Durchmesser kleiner als der Durchmesser der sich überlappenden Öffnungen (12, 13) ist.

14. Scheinwerfer nach einem der Ansprüche 1 bis 13, dadurch gekennzeichnet, daß von der Hülse (16) und der sich überlappenden Öffnungen (12, 13) eine Achse gebildet wird, um welche das zweite Verbindungsteil (6) schwenkbar ist.

15. Scheinwerfer nach einem der Ansprüche 1 bis 14, dadurch gekennzeichnet, daß der Abstand der Öffnung (12) des Wandungsteils (2) etwas größer ist als der Abstand der Öffnung (13) des zweiten Verbindungsteils (6) zu seiner an der Stirnfläche (3) des Wandungsteils (2) anliegenden Fläche.

16. Scheinwerfer nach einem der vorstehenden Ansprüche, dadurch gekennzeichnet, daß die doppelte Überlappung von einem klammerartig ausgeführten zweiten Verbindungsteil (6) gebildet wird, welches auf den Wandungsteil (2) des Reflektors (1) aufgesetzt ist.

17. Scheinwerfer nach Anspruch 16, dadurch gekennzeichnet, daß eine aus Kunststoff hergestellte Brücke (28) an ihren beiden Enden ein angeformtes zweites Verbindungsteil (6) aufweist, mit denen sie zwischen zwei parallel zueinander verlaufenden Wandungsteilen (2) eingesetzt ist.

18. Scheinwerfer nach Anspruch 17, dadurch gekennzeichnet, daß zwischen den zweiten Verbindungsteilen (6) und dem jeweiligen Wandungsteil (2) eine einfache Überlappung besteht.

19. Scheinwerfer nach Anspruch 16 oder 17, dadurch gekennzeichnet, daß zwischen der Brücke (28) und den beiden Wandungsteilen (2) des Reflektors eine Spielpassung besteht.

20. Scheinwerfer nach einem der vorstehenden Ansprüche, dadurch gekennzeichnet, daß die Hülse (16) mit ihrer Mantelfläche ausschließlich an den Seitenflächen der sich überlappenden Öffnungen (12, 13 und/oder 12, 13, 24) anliegt.

21. Scheinwerfer nach einem der vorstehenden Ansprüche, dadurch gekennzeichnet, daß ein den Wandungsteil (2) überlappender Abschnitt (23) des zweiten Verbindungsteils (6) mit einer schmalen Längsseite (25) an einer Rippe (26) des Wandungsteils (2) und mit einer Fläche an der Stirnfläche (3) des Wandungsteils (2) anliegt.

**Claims**

1. Headlamp for vehicles, incorporating the following features:
   - the reflector (1) is made from a brittle plastic and is so connected to its locating part (4) as to be adjustable about at least one axis,
   - the connection of the reflector (1) to the locating part (4) is constituted by a first connecting part (5) mounted onto the locating part (4) and a second connecting part (6), made of plastic, which is fixed to a wall part (2) which is joined to the reverse of the reflecting dish of the reflector (1) and has substantially plane broad lateral faces,

   characterised in that
   - the thickness of the wall parts joined to the reverse of the reflecting dish of the reflector (1) does not, least not substantially, exceed the thickness of the thin-walled reflecting dish,
   - the wall part (2) of the reflector (1) and the second connecting part (6) incorporate two-dimensionally contiguous and overlapping wall portions (10, 11 or 10, 11, 23) with very largely overlapping openings (12, 13 or 12, 13, 24),
   - into the openings (12, 13 or 12, 13, 24) is inserted a sleeve (16) of elastic material with a bolt-shaped fixing part (17) passing through them, the longitudinal axis of said fixing part (17) extending perpendicular to the broad lateral faces of the overlapping portions (10, 11 or 10, 11, 23),
   - the bolt-shaped fixing part (17) so strongly compresses the sleeve (16) axially and/or so strongly expands at least sections of the passage through the sleeve (16) that the circumferential surface of the sleeve (16) is expanded radially outwards and there is a press fit both between the circumferential surface of the sleeve (16) and the lateral faces of the overlapping openings (12, 13 or 12, 13, 24) and also between the inner surface of the sleeve (16) and the bolt-shaped fixing part (17).

2. Headlamp according to claim 1, characterised in that there is a single overlap between the wall part (2) of the reflector (1) and the second connecting part (6).

3. Headlamp according to claim 1, characterised in that there is a double overlap between the wall part (2) of the reflector (1) and the second connecting part (6).

4. Headlamp according to one of claims 1 to 3, characterised in that the opening (12, 13) is formed by a drilled hole running through the overlapping portions (10, 11).

5. Headlamp according to claim 4, characterised by the use of a rivet as the bolt-shaped fixing part (17).

6. Headlamp according to claim 5, characterised in that the rivet (17) rests with its swage head (20) against an outer edge of the drilled hole (12, 13) and rests with the driven head (21) solely against the sleeve (16).

7. Headlamp according to claim 5 or 6, characterised in that the swage head (20) rests against a portion (11) of the second connecting part (6) that overlaps the wall part (2).

8. Headlamp acording to one of claims 5 to 7, characterised in that the driven head is a hollow countersunk head.

9. Headlamp according to one of claims 1 to 4, characterised by the use of a screw as the bolt-shaped fixing part (17).

10. Headlamp according to claim 9, characterised in that the sleeve (16) pushed onto the threaded shank of the screw (17) rests with one end face against the head (18) of the screw (17) and with the other end face against a bottom face (14) of the overlapping openings (12, 13), while the end portion of the threaded shank that protrudes from the sleeve (16) engages in a threaded hole (15) in the second connecting part (6), which hole has been inserted centrally into the bottom face (14).

11. Headlamp according to claim 9 or 10, characterised in that the head (18) of the screw is a countersunk head which is countersunk in the sleeve (16).

12. Headlamp according to one of claims 1 to 11, characterised in that between the driven rivet head (21), or the head (18) of the screw, and the adjoining edge of the opening (12), the sleeve (16) is pressed outwards so forcefully that it overlaps the edge of the opening (12).

13. Headlamp according to one of claims 1 to 12, characterised in that the driven rivet head (21), or the head (18) of the screw, is smaller in diameter than the diameter of the mutually overlapping openings (12, 13).

14. Headlamp according to one of claims 1 to 13, characterised in that the sleeve (16) and the mutually overlapping openings (12, 13) constitute an axis about which the second connecting part (6) is adapted to swivel.

15. Headlamp according to one of claims 1 to 14, characterised in that the distance from the opening (12) in the wall part (2) is somewhat greater than the distance from the opening (13) in the second connecting part (6) to the face thereof resting against the end face (3) of the wall part (2).

16. Headlamp according to one of the preceding claims, characterised in that the double overlap is constituted by a second connecting part (6) constructed like a bracket, which is placed onto the wall part (2) of the reflector (1).

17. Headlamp according to claim 16, characterised in that a bridge (28) made of plastic incorporates at both ends a moulded second connecting part (6) by means of which it is introduced between two wall parts (2) extending parallel to one another.

18. Headlamp according to claim 17, characterised in that there is a single overlap between the second connecting parts (6) and the respective wall part (2).

19. Headlamp according to claim 16 or 17, characterised in that there is a loose fit between the bridge (28) and the two wall parts (2) of the reflector.

20. Headlamp according to one of the preceding claims, characterised in that the sleeve (16) rests with its circumferential surface solely against the lateral surfaces of the overlapping openings (12, 13 and/or 12, 13, 24).

21. Headlamp according to one of the preceding claims, characterised in that a portion (23) of the second connecting part (6) that overlaps the wall part (2) rests with one narrow long face (25) against a ridge (26) on the wall part (2) and with one face against the end face (3) of the wall part (2).

## Revendications

1. Projecteur pour véhicules présentant les particularités suivantes :
   - le réflecteur (1) est fabriqué en une matière plastique fragile et est relié par sa partie réceptrice (4) de façon à pouvoir se déplacer autour d'au moins un axe,
   - la liaison entre le réflecteur (1) et la partie réceptrice (4) est formée d'un premier élément de liaison (5) fixé à la partie réceptrice (4), et d'un second élément de liaison (6) fait d'une matière plastique et qui est fixée à une partie de paroi (2) à possédant des surfaces latérales larges sensiblement planes, et liée à la face arrière de la cuvette réflectrice du réflecteur (1),
   caractérisé en ce que
   - l'épaisseur de la paroi des parties de parois liées à la face arrière de la cuvette réceptrice du réflecteur (1) n'est pas supérieure, du moins pas notablement supérieure, à l'épaisseur de paroi de la cuvette réflectrice à paroi mince,
   - la partie de paroi (2) du réflecteur (1) et le second élément de liaison (6) présentent des segments de parois (10, 11 ou 10, 11, 23) qui sont appuyés l'un contre l'autre par des surfaces étendues et se recouvrent mutuellement, présentent des ouvertures (12, 13 ou 12, 13, 24) qui se recouvrent dans une très large mesure,

- dans les ouvertures (12, 13 ou 12, 13, 24), est encastrée une douille (16) faite d'une matière élastique et munie d'un organe de fixation (17) en forme de goujon qui la traverse, et dont l'axe longitudinal s'étend perpendiculairement aux surfaces latérales larges des segments (10, 11 ou 10, 11, 23) qui se recouvrent,

- l'organe de fixation (17) en forme de goujon comprime la douille (16) axialement et/ou dilate la lumière de la douille (16), du moins par endroits, suffisamment fort pour que la surface latérale de la douille (16) soit dilatée radialement vers l'extérieur et qu'il s'établisse un ajustement serré, aussi bien entre la surface latérale de la douille (16) et les surfaces latérales des ouvertures (12, 13 ou 12, 13, 24) qui se recouvrent qu'entre la surface intérieure de la douille (16) et l'organe de fixation (17) en forme de goujon.

2. Projecteur selon la revendication 1, caractérisé en ce qu'il existe un recouvrement simple entre la partie de paroi (2) du réflecteur (1) et le second élément de liaison (6).

3. Projecteur selon la revendication 1, caractérisé en ce qu'il existe un double recouvrement entre la partie de paroi (2) du récepteur (1) et le second élément de liaison (6).

4. Projecteur selon une des revendications 1 à 3, caractérisé en ce que l'ouverture (12, 13) est formée par un perçage qui traverse les segments (10, 11) qui se recouvrent.

5. Projecteur selon la revendication 4, caractérisé en ce qu'un rivet joue le rôle de l'organe de fixation (17) en forme de goujon.

6. Projecteur selon la revendication 5, caractérisé en ce que le rivet (17) est appuyé par une tête de pose (20) contre un bord extérieur du perçage (12, 13) et est appuyée uniquement contre la douille (16) par sa tête fermante (21).

7. Projecteur selon la revendication 5 ou 6, caractérisé en ce que la tête de pose (20) est appuyée contre un segment (11) du second élément de liaison (6) qui recouvre la partie de paroi (2).

8. Projecteur selon une des revendications 5 à 7, caractérisé en ce que la tête fermante est une tête fraisée creuse.

9. Projecteur selon une des revendications 1 à 4, caractérisé en ce qu'on utilise une vis comme organe de fixation (17) en forme de goujon.

10. Projecteur selon la revendication 9, caractérisé en ce que la douille (6) emmanchée sur la tige filetée de la vis (17) est appuyée contre la tête (18) de la vis (17) par une surface frontale et est appuyée par son autre surface frontale contre une surface de fond (14) des ouvertures (12, 13) qui se recouvrent, tandis que le segment terminal de la tige filetée, qui émerge de la douille (16) est vissé dans un perçage fileté (15) du second élément de liaison (6) qui est ménagé en position centrale dans la surface de fond (14).

11. Projecteur selon la revendication 9 ou 10, caractérisé en ce que la tête (18) de la vis est une tête fraisée qui est encastrée dans la douille (16).

12. Projecteur selon une des revendications 1 à 11, caractérisé en ce que la douille (16) est suffisamment pressée vers l'extérieur entre la tête fermante (21) du rivet ou la tête (18) de la vis, et le bord de l'ouverture (12) qui lui est adjacent, pour empiéter sur le bord de l'ouverture (12).

13. Projecteur selon une des revendications 1 à 12, caractérisé en ce que la tête fermante (21) du rivet, ou la tête (18) de la vis est inférieure en diamètre au diamètre des ouvertures (12, 13) qui se recouvrent.

14. Projecteur selon une des revendications 1 à 13, caractérisé en ce que la douille (16) et les ouvertures (12, 13) qui se recouvrent forment un axe autour duquel le second élément de liaison (6) peut pivoter.

15. Projecteur selon une des revendications 1 à 14, caractérisé en ce que la distance de l'ouverture (12) de la partie de paroi (2) est légèrement plus grande que la distance entre l'ouverture (13) du second élément de liaison (6) et sa surface appliquée contre la surface frontale (3) de la partie de paroi (2).

16. Projecteur selon une des revendications précédentes, caractérisé en ce que le recouvrement double est formé par un second élément de liaison (6) en forme de pince qui est emboîté sur la partie de paroi (2) du réflecteur (1).

17. Projecteur selon la revendication 16, caractérisé en ce qu'un pont (18) fabriqué en matière plastique présente à ses deux extrémités, des seconds éléments de liaison (6) venus de matière par lesquels il est emboîté entre deux parties de parois (2) s'étendant parallèlement entre elles.

18. Projecteur selon la revendication 17, caractérisé en ce qu'il existe un recouvrement simple entre les seconds éléments de liaison (6) et les parties de parois (2) respectives.

19. Projecteur selon la revendication 16 ou 17, caractérisé en ce qu'il existe un ajustement à jeu entre le pont (28) et les deux parties de parois (2) du réflecteur.

20. Projecteur selon une des revendications précédentes, caractérisé en ce que la douille (16) est appliquée exclusivement par sa surface latérale contre les surfaces latérales des ouvertures (12, 13 et/ou 12, 13, 24) qui se recouvrent.

21. Projecteur selon une des revendications précédentes, caractérisé en ce qu'un segment (23) du second élément de liaison (6) qui recouvre la partie de paroi (2) est en appui par un côté longitudinal étroit (25) contre une nervure (26) de la partie de paroi (2) et est en appui par une surface contre la surface frontale (3) de la partie de paroi (2).

FIG 1

FIG 2

FIG 3
Ansicht X

FIG 5
Ansicht y

25    3
23

11

2

26

FIG 4

9    27    6
23

1    15    11    24
13
12
2

17    16

y

EP 0 393 366 B1

FIG 6

EP 0 393 366 B1